# EUROPEAN PATENT APPLICATION

(11) **EP 4 570 873 A1**
(43) Date of publication of application: **18.06.2025**
(21) Application number: 23852345.0
(22) Date of filing: 24.07.2023
(51) Int. Cl.: C09D 11/30, C09D 11/40, B41M 5/00, B41J 2/01

(54) **INKJET INK, INK SET, INK MEDIUM SET, AND PRINTING MEDIUM**

(30) Priority: 09.08.2022 JP 2022127336
(71) Applicant: Nippon Kayaku Kabushiki Kaisha, Tokyo 100-0005 (JP)
(72) Inventor: UEKI Natsuko, Tokyo 115-8588 (JP); MISAWA Shunta, Tokyo 115-8588 (JP); YOSHIDA Keishiro, Tokyo 115-8588 (JP)
(74) Representative: Maiwald GmbH
(86) International application number: PCT/JP2023/026928
(87) International publication number: WO 2024/034369

(57) **Abstract**

Provides is an inkjet ink which contains a water-insoluble coloring agent, a dispersant, a fixing resin and water, wherein: the fixing resin contains, as constituent monomer units, a C1-C4 alkyl (meth)acrylate unit and a styrene sulfonate unit; at least a butyl acrylate unit is contained as a C1-C4 alkyl (meth)acrylate unit; the content of the butyl acrylate unit in the fixing resin is more than 31.5% by mass but less than 46.5% by mass; and the content of the styrene sulfonate unit in the fixing resin is not less than 0.1% by mass but less than 3.0% by mass. Also provided are: an ink set which comprises this inkjet ink; an ink medium set which comprises this inkjet ink or this ink set and a printing medium; and a printing medium to which this inkjet ink is adhered.

## Description

### TECHNICAL FIELD

The present invention relates to an inkjet ink, an ink set, an ink and medium set, and a printed medium.

### BACKGROUND ART

Among various color printing methods, printing with inkjet printers (inkjet printing) is one of the typical printing methods. The inkjet printing method includes forming ink droplets; and depositing the ink droplets on printing media, such as paper sheets, to produce prints. In recent years, the inkjet printing method has increasingly found industrial applications and thus has been required to enable printing on various printing media.

Printing media for industrial applications include non-ink-absorbent media, such as films. Inks for printing on such non-ink-absorbent media have been developed, such as solvent inks including an organic solvent as a main solvent and curable inks including a polymerizable monomer.
Unfortunately, such inks have limited applications since they often cause safety issues, such as adverse effects on natural environments or living bodies.

Thus, water-based inks including water as a main solvent and containing polymer particles, which enables printing of durable images even on non-ink-absorbent media, have been actively developed (see, for example, Patent Documents 1 to 4).

### Citation List

### Patent Document

Patent Document 1: Japanese Patent No. 5504890
Patent Document 2: Japanese Patent No. 6295825
Patent Document 3: Japanese Unexamined Patent Application, Publication No. 2012-72354
Patent Document 4: Japanese Patent No. 3257391

### DISCLOSURE OF THE INVENTION

### Problems to be Solved by the Invention

By the way, when an ink filled in an inkjet printer dries, a solid is produced in nozzles and ink channels of an inkjet head, which can cause clogging. When clogging occurs in the inkjet head, an ink cannot be stably discharged, resulting in poor image quality of a printed image.
Therefore, an ink is required to have an ability to not easily thicken during storage (storage stability), and an ability to be easily dissolved and removed even when solidified (redispersibility). In recent years, there also is a need for an ink to produce printed images with excellent fingernail scratch resistance and tape resistance even when printed on non-ink-absorbent media. However, an ink that satisfies all of these has not yet been proposed.

It is an object of the present invention to provide an inkjet ink that has excellent storage stability and redispersibility and can produce a printed image with excellent fingernail scratch resistance and tape resistance even when printed on a non-ink-absorbent medium, to provide an ink set including such an inkjet ink, to provide an ink and medium set including such an inkjet ink or such an ink set and a printing medium, and to provide a printed medium including a medium and such an inkjet ink deposited on the medium.

### Means for Solving the Problems

Specific means for solving the above-mentioned object include the following embodiments.
<1> An inkjet ink including: a water-insoluble colorant; a dispersing agent; a fixing resin; and water,
   the fixing resin including a C1-C4 alkyl (meth)acrylate unit and a styrenesulfonic acid unit as constituent monomer units, and including at least a butyl acrylate unit as the C1-C4 alkyl (meth)acrylate unit, and
   the fixing resin including more than 31.5% by mass and less than 46.5% by mass of the butyl acrylate unit and 0.1% by mass or more and less than 3.0% by mass of the styrenesulfonic acid unit.
<2> The inkjet ink according to <1>, in which the fixing resin includes, as the constituent monomer unit, at least one selected from the group consisting of a methyl methacrylate unit, an allyl methacrylate unit, and a methacrylic acid unit.
<3> The inkjet ink according to <1> or <2>, in which the fixing resin is a resin obtained by polymerization in a presence of a reactive emulsifier.
<4> An ink set including: the inkjet ink according to any one of <1> to <3>; and an additional inkjet ink different from the inkjet ink.
<5> An ink and medium set including: the inkjet ink according to any one of <1> to <3> or the ink set according to aspect <4>; and a printing medium.
<6> A printed medium including: a medium; and an inkjet ink deposited on the medium, the inkjet ink being the inkjet ink according to any one of <1> to <3>.

### Effects of the Invention

The present invention can provide an inkjet ink that has excellent storage stability and redispersibility and can produce a printed image with excellent fingernail scratch resistance and tape resistance even when printed on a non-ink-absorbent medium; an ink set including such an inkjet ink; an ink and medium set including such an inkjet ink or such an ink set and a printing medium; and a printed medium including a medium and such an inkjet ink deposited on the medium.

### PREFERRED MODE FOR CARRYING OUT THE INVENTION

Hereinafter, specific embodiments to which the present invention is applied will be described in detail. As used herein, the term "C.I." means "Color Index". As used herein, the terms "alkylene", "propylene", and "alkyl" are intended to include both linear and branched structures unless otherwise specified.

### <Inkjet ink>

An inkjet ink (hereinafter also simply referred to as "ink") according to the present embodiment includes a water-insoluble colorant, a dispersing agent, a fixing resin, and water, the fixing resin including a C1-C4 alkyl (meth)acrylate unit and a styrenesulfonic acid unit as constituent monomer units, and including at least a butyl acrylate unit as the C1-C4 alkyl (meth)acrylate unit, and the fixing resin including more than 31.5% by mass and less than 46.5% by mass of the butyl acrylate unit and 0.1% by mass or more and less than 3.0% by mass of the styrenesulfonic acid unit. The inkjet ink according to the present embodiment has excellent storage stability and redispersibility and can produce a printed image with excellent fingernail scratch resistance and tape resistance even when printed on a non-ink-absorbent medium.

Hereinafter, components contained in an ink according to the present embodiment will be described in detail. Regarding each of the components described below, one or two or more of the materials listed for each component may be used alone or in any combination.

### [Water-Insoluble Colorant]

The term "water-insoluble colorant" means a colorant having a solubility in water at 25°C of typically 5 g/L or less, preferably 3 g/L or less, more preferably 1 g/L or less, further preferably 0.5 g/L or less. The solubility may have a lower limit of 0 g/L.

The water-insoluble colorant may be one known in the art, such as a pigment, a disperse dye, or a solvent dye. Among these, the water-insoluble colorant is preferably a pigment.

The pigment may be, for example, an inorganic pigment, an organic pigment, an extender pigment, or a hollow particle pigment.

Examples of the inorganic pigment include carbon black, metal oxides, metal hydroxides, metal sulfides, metal ferrocyanides, or metal chlorides.

The ink according to the present embodiment may be a black ink containing an inorganic pigment as the water-insoluble colorant. In such a black ink, the inorganic pigment is preferably carbon black, such as thermal black, acetylene black, oil furnace black, gas furnace black, lamp black, gas black, or channel black. Specific examples of carbon black include Raven series manufactured by Columbia Carbon; Monarch, Regal, or Mogul series manufactured by Cabot Corporation; Color Black, Printex, Special Black, or Nerox series manufactured by Orion Engineered Carbons; or MA and MCF series, No. 25, No. 33, No. 40, No. 47, No. 52, No. 900, or No. 2300 manufactured by Mitsubishi Chemical Corporation.

The ink according to the present embodiment may be a white ink containing an inorganic pigment as the water-insoluble colorant. In such a white ink, the inorganic pigment may be an oxide, nitride, or oxynitride of a metal, such as zinc, silicon, aluminum, titanium, strontium, or zirconium; or an inorganic compound, such as glass or silica. Among these, the inorganic pigment is preferably titanium dioxide or zinc oxide.

Examples of the organic pigment include azo pigments, disazo pigments, phthalocyanine pigments, quinacridone pigments, isoindolinone pigments, dioxazine pigments, perylene pigments, perinone pigments, thioindigo pigments, anthraquinone pigments, quinophthalone pigments, or various other pigments. Among these, disazo pigments are preferred.

Specific examples of the organic pigment include yellow pigments, such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, 202, or 213; red pigments, such as C.I. Pigment Red 5, 7, 12, 48, 48:1, 57, 88, 112, 122, 123, 146, 149, 150, 166, 168, 177, 178, 179, 184, 185, 202, 206, 207, 254, 255, 257, 260, 264, 269, or 272; blue pigments, such as C.I. Pigment Blue 1, 2, 3, 15, 15:1, 15:2, 15:3, 15:4, 15:6, 16, 22, 25, 60, 66, or 80; violet pigments, such as C.I. Pigment Violet 19, 23, 29, 37, 38, or 50; orange pigments, such as C.I. Pigment Orange 13, 16, 43, 68, 69, 71, or 73; green pigments, such as C.I. Pigment Green 7, 36, or 54; or black pigments, such as C.I. Pigment Black 1. Among these, C. I. Pigment Blue 15:4 is preferred.

Examples of the extender pigment include silica, calcium carbonate, talc, clay, barium sulfate, or white carbon. These extender pigments are often used in combination with other colorants.

Examples of the hollow particle pigment include known hollow particles, such as those disclosed in U.S. Patent No. 4880465, Japanese Patent No. 3562754, Japanese Patent No. 6026234, Japanese Patent No. 5459460, Japanese Unexamined Patent Application, Publication No. 2003-268694, or Japanese Patent No. 4902216. In particular, the hollow particle pigment is preferably used as a white pigment.

The disperse dye is preferably, for example, a dye selected from C.I. Disperse dyes. Examples of the disperse dye include yellow dyes, such as C.I. Disperse Yellow 9, 23, 33, 42, 49, 54, 58, 60, 64, 66, 71, 76, 79, 83, 86, 90, 93, 99, 114, 116, 119, 122, 126, 149, 160, 163, 165, 180, 183, 186, 198, 200, 211, 224, 226, 227, 231, or 237; red dyes, such as C.I. Disperse Red 60, 73, 88, 91, 92, 111, 127, 131, 143, 145, 146, 152, 153, 154, 167, 179, 191, 192, 206, 221, 258, or 283; orange dyes, such as C.I. Disperse Orange 9, 25, 29, 30, 31, 32, 37, 38, 42, 44, 45, 53, 54, 55, 56, 61, 71, 73, 76, 80, 96, or 97; violet dyes, such as C.I. Disperse Violet 25, 27, 28, 54, 57, 60, 73, 77, 79, or 79:1; or blue dyes, such as C.I. Disperse Blue 27, 56, 60, 79:1, 87, 143, 165, 165:1, 165:2, 181, 185, 197, 202, 225, 257, 266, 267, 281, 341, 353, 354, 358, 364, 365, or 368.

The solvent dye is preferably, for example, a dye selected from C.I. Solvent dyes.

The water-insoluble colorant is preferably in the form of particles with an average particle size of 30 to 300 nm, more preferably with an average particle size of 50 to 250 nm. As used herein, the term "average particle size" refers to the average size of particles measured by a laser light scattering method.

The content of the water-insoluble colorant in the ink according to the present embodiment is preferably 1 to 30% by mass, more preferably 1 to 10% by mass, further preferably 2 to 7% by mass, based on the total mass of the ink.

### [Dispersing agent]

The dispersing agent may be, for example, a copolymer of at least two monomers selected from monomers such as styrene and a derivative thereof; vinyl naphthalene and a derivative thereof; an aliphatic alcohol ester of an α,β-ethylenically unsaturated carboxylic acid; (meth)acrylic acid and a derivative thereof; maleic acid and a derivative thereof; itaconic acid and a derivative thereof; fumaric acid and a derivative thereof; or vinyl acetate, vinyl alcohol, vinyl pyrrolidone, acrylamide, and derivatives thereof (preferably, at least one of the selected two or more monomers is a hydrophilic monomer). The hydrophilic monomer may be acrylic acid, methacrylic acid, or any other monomer having a carboxy group that can remain after polymerization.

Examples of such a copolymer include styrene-(meth)acrylic acid copolymers, styrene-(meth)acrylic acid-(meth)acrylate copolymers, (meth)acrylate-(meth)acrylic acid copolymers, polyethylene glycol (meth)acrylate- (meth)acrylic acid copolymers, and styrene-maleic acid copolymers. Among these, styrene-(meth)acrylic acid copolymers, styrene-(meth)acrylic acid-(meth)acrylate copolymers, (meth)acrylate-(meth)acrylic acid copolymers, and polyethylene glycol (meth)acrylate-(meth)acrylic acid copolymers are preferred; styrene-(meth)acrylic acid copolymers, styrene-(meth)acrylic acid-(meth)acrylate copolymers, and (meth)acrylate-(meth)acrylic acid copolymers are more preferred; (meth)acrylate-(meth)acrylic acid copolymers are further preferred; and methacrylate-methacrylic acid copolymers are particularly preferred. The copolymer may be, for example, a block copolymer, a random copolymer, or a graft copolymer. These copolymers may also be in the form of a salt.

As used herein, the term "(meth)acrylic" is intended to include both "acrylic" and "methacrylic". The same applies to the term "(meth)acrylate" and like terms.

The dispersing agent may be synthesized or obtained commercially.

For example, the dispersing agent may be synthesized as the A-B block polymer disclosed in PCT International Publication No. WO2013/115071. The A block of the A-B block polymer disclosed in WO2013/115071 is derived from at least one monomer selected from the group consisting of (meth)acrylic acid and linear or branched C4 alkyl (meth)acrylate, preferably derived from at least one monomer selected from the group consisting of methacrylic acid and n-butyl methacrylate, more preferably derived from both methacrylic acid and n-butyl methacrylate. The B block of the A-B block polymer disclosed in WO2013/115071 is derived from at least one monomer selected from the group consisting of benzyl methacrylate and benzyl acrylate, preferably derived from benzyl methacrylate. Specific examples of the A-B block polymer include the block copolymers disclosed from the "Synthetic Example 3" section to the "Synthetic Example 8" section in WO2013/115071.

Examples of the commercially available dispersing agents include Joncyrl 62, 67, 68, 678, or 687 (styrene-acrylic copolymers manufactured by BASF); or Aron AC-10SL (polyacrylic acid manufactured by Toagosei Co., Ltd.).

The dispersing agent has a weight average molecular weight (MW) of preferably 3,000 to 50,000, more preferably 7,000 to 25,000. The dispersing agent has an acid value of preferably 50 to 300 mg KOH/g, more preferably 80 to 275 mg KOH/g, further preferably 80 to 250 mg KOH/g.

The dispersing agent may be used in the form of a mixture with the water-insoluble colorant. The surfaces of the water-insoluble colorant particles may be partially or entirely coated with the dispersing agent. Both of these forms may also be used in combination.

The ratio of the total mass of the dispersing agent to the total mass of the water-insoluble colorant (the value expressed as "(the total mass of the dispersing agent)/(the total mass of the water-insoluble colorant)") is typically 0.1 to 1.0, preferably 0.1 to 0.6, more preferably 0.2 to 0.5.

### [Fixing resin]

The fixing resin includes a C1-C4 alkyl (meth)acrylate unit and a styrenesulfonic acid unit as constituent monomer units, and including at least a butyl acrylate unit as the C1-C4 alkyl (meth)acrylate unit, and includes more than 31.5% by mass and less than 46.5% by mass of the butyl acrylate unit and 0.1% by mass or more and less than 3.0% by mass of the styrenesulfonic acid unit.

Examples of the C1-C4 alkyl (meth)acrylate unit include a methyl acrylate unit, an ethyl acrylate unit, a butyl acrylate unit, a methyl methacrylate unit, an ethyl methacrylate unit, a butyl methacrylate unit, etc.

The styrenesulfonic acid unit may be in the form of a salt such as an alkali metal salt or an ammonium salt. The alkali metal salt may be, for example, a sodium salt. When the styrenesulfonic acid unit is in the form of a salt, the salt may be used alone, or two or more thereof may be used in combination.

The content of the butyl acrylate unit in the fixing resin is preferably more than 31.5% by mass to 45% by mass or less, more preferably 32 to 40% by mass, further preferably 33 to 39% by mass, particularly preferably 34 to 38% by mass, especially preferably 35 to 37% by mass.

The content of the styrenesulfonic unit in the fixing resin is preferably 0.2 to 2% by mass, more preferably 0.3 to 1.5% by mass, further preferably 0.4 to 1.2% by mass.

In addition to the butyl acrylate unit and the styrenesulfonic acid unit, the fixing resin preferably includes at least one selected from the group consisting of a methyl methacrylate unit, a butyl methacrylate unit, an allyl methacrylate unit, a methacrylic acid unit, and a 2-ethylhexyl acrylate unit and more preferably includes at least one selected from the group consisting of a methyl methacrylate unit, an allyl methacrylate unit, and a methacrylic acid unit.

When the fixing resin includes a methyl methacrylate unit, the content thereof is preferably 5 to 30% by mass, more preferably 5 to 20% by mass, further preferably 5 to 15% by mass.

When the fixing resin includes an allyl methacrylate unit, the content thereof is preferably 0.5 to 3.0% by mass, more preferably 0.8 to 2.0% by mass, further preferably 1.0 to 2.0% by mass.

When the fixing resin includes a methacrylic acid unit, the content thereof is preferably 10 to 20% by mass, more preferably 10 to 15% by mass, further preferably 11 to 14% by mass.

The fixing resin may further include other constituent monomer units other than those listed above. Examples of the other constituent monomer units include, for example, a thioglycolic acid-2-ethylhexyl ether unit.

The fixing resin is preferably obtained by polymerization of the constituent monomers of the fixing resin in the presence of a reactive emulsifier. As such, the fixing resin may be obtained in the form of an emulsion by polymerization in the presence of a reactive emulsifier. The ink according to the present embodiment is preferably prepared using such a fixing resin emulsion.

The reactive emulsifier is an emulsifier having a radically polymerizable double bond in the molecule. In general, the reactive emulsifier molecule has one radically polymerizable double bond.

Examples of the reactive emulsifier include ammonium polyoxyalkylene alkenyl ether sulfate, ammonium ether sulfate, phosphate ester, bis(polyoxyethylene polycyclic phenyl ether) methacrylate sulfate, sodium 2-sulfoethyl methacrylate, alkoxypolyethylene glycol maleate, or salts thereof. Specific examples of the reactive emulsifier include sodium alkylallyl sulfosuccinate (ELEMINOL JS-20 manufactured by Sanyo Chemical Industries, Ltd.), dipotassium alkenyl succinate (LATEMUL ASK manufactured by Kao Corporation), polyoxyethylene alkylpropenylphenyl ether sulfate salt (AQUALON HS-10 manufactured by DKS Co., Ltd.), α-[1-[(allyloxy)methyl]-2-(nonylphenoxy)ethyl]-ω-polyoxyethylene sulfate salt (ADEKA REASOAP SE series, such as ADEKA REASOAP SE-10N, manufactured by ADEKA Corporation), polyoxyethylene-1-(allyloxymethyl) alkyl ether sulfate ammonium salt (AQUALON KH series, such as AQUALON KH-1025, manufactured by DKS Co., Ltd.), styrenesulfonate (SPINOMER NaSS manufactured by Tosoh Finechem Corporation), α-[2-[(allyloxy)-1-(alkyloxymethyl)]ethyl]-ω-polyoxyethylene sulfate salt (ADEKA REASOAP SR series, such as ADEKA REASOAP SR-1025, manufactured by ADEKA Corporation), polyoxyethylene polyoxybutylene (3-methyl-3-butenyl) ether sulfate salt (LATEMUL PD-104 manufactured by Kao Corporation), or ammonium salts of [sulfuric acid esters of (products of polyaddition of oxirane with {products of reaction between C10-C14 branched alkanol and 1-(allyloxy)-2,3-epoxypropane}, which are composed mainly of {α-[2-(allyloxy)-1-({C10-C14 alkyloxy}methyl)ethyl]-ω-hydroxypoly(oxyethylene) (n = 1 to 100)})]. Among these, ammonium salts of [sulfuric acid esters of (products of polyaddition of oxirane with {products of reaction between C10-C14 branched alkanol and 1-(allyloxy)-2,3-epoxypropane}, which are composed mainly of {α-[2-(allyloxy)-1-({C10-C14 alkyloxy}methyl)ethyl]-ω-hydroxypoly(oxyethylene) (n = 1 to 100)})] are preferred.

The reactive emulsifier may be used in any suitable amount for the synthesis of the fixing resin. As a guide, the reactive emulsifier may be used in an amount of typically 0.1 to 10% by mass, preferably 0.3 to 5% by mass, more preferably 0.5 to 3% by mass, further preferably 1 to 3% by mass, based on the total mass of the constituent monomers other than the reactive emulsifier. When the reactive emulsifier is used in an amount in such a range, the fixing resin can be synthesized in a stable manner and the fixing resin emulsion will tend to have a viscosity that is adjustable within a desired range.

The glass transition point (Tg) of the fixing resin is preferably 0 to 200°C, more preferably 0 to 100°C, further preferably 10 to 80°C, particularly preferably 20°C to 60°C, especially preferably 30°C to 50°C.

The content of the fixing resin in the ink according to the present embodiment is preferably 0.1 to 30% by mass, more preferably 1 to 20% by mass, further preferably 2 to 20% by mass, particularly preferably 3 to 10% by mass, especially preferably 4 to 7% by mass, based on the total mass of the ink.

### [Water]

The water is preferably ion-exchanged water, distilled water, or any other type of water with less impurities, such as metal ions.

The water content of the ink according to the present embodiment is typically 30 to 80% by mass, preferably 35 to 80% by mass, more preferably 40 to 80% by mass, based on the total mass of the ink.

### [Organic solvent]

The ink according to the present embodiment may further contain an organic solvent. Examples of the organic solvent include C1-C6 alkanols, such as methanol, ethanol, propanol, isopropanol, butanol, isobutanol, sec-butanol, or tert-butanol; carboxylic acid amides, such as N,N-dimethylformamide or N,N-dimethylacetamide; lactams, such as 2-pyrrolidone, N-methyl-2-pyrrolidone, or N-methylpyrrolidin-2-one; cyclic ureas, such as 1,3-dimethylimidazolidin-2-one or 1,3-dimethylhexahydropyrimid-2-one; ketones, keto alcohols, or carbonates, such as acetone, 2-methyl-2-hydroxypentan-4-one, or ethylene carbonate; cyclic ethers, such as tetrahydrofuran or dioxane; monoalkylene, oligoalkylene, or polyalkylene glycols or thioglycols having a C2-C6 alkylene unit, such as ethylene glycol, diethylene glycol, 1,2-propylene glycol, 1,3-propylene glycol, 1,2-butylene glycol, 1,4-butylene glycol, diethylene glycol, triethylene glycol, tetraethylene glycol, dipropylene glycol, polyethylene glycol (preferably with a molecular weight of 400, 800, 1,540, or more), polypropylene glycol, thiodiglycol, or dithioglycol; C3-C9 polyols (triols), such as glycerol, diglycerol, hexane-1,2,6-triol, or trimethylolpropane; glycol ethers, such as ethylene glycol monomethyl ether, ethylene glycol monoethyl ether, ethylene glycol monoallyl ether, ethylene glycol monoisopropyl ether, diethylene glycol monomethyl ether, diethylene glycol monoethyl ether, diethylene glycol monobutyl ether (butyl carbitol), diethylene glycol monohexyl ether, triethylene glycol monomethyl ether, triethylene glycol monoethyl ether, triethylene glycol monobutyl ether, propylene glycol monopropyl ether, propylene glycol monobutyl ether, dipropylene glycol monopropyl ether, or dipropylene glycol monomethyl ether (preferably glycol ether selected from the group consisting of C4-C10 monoethylene, diethylene, or triethylene glycol ethers and C4-C13 monopropylene, dipropylene, or tripropylene glycol ethers); C5-C9 alkanediols, such as 1,2-pentanediol, 1,5-pentanediol, 1,2-hexanediol, 1,6-hexanediol, 2-methyl-2,4-pentanediol, 2-ethyl-1,3-hexanediol, 2,4-diethyl-1,5-pentanediol, or 1,8-octanediol; γ-butyrolactone; or dimethyl sulfoxide.

The content of the organic solvent in the ink according to the present embodiment is typically 0 to 60% by mass, preferably 1 to 60% by mass, more preferably 2 to 50% by mass, further preferably 3 to 45% by mass, particularly preferably 5 to 40% by mass, based on the total mass of the ink.

### [Surfactant]

The ink according to the present embodiment may further contain a surfactant. Examples of the surfactant include anionic, nonionic, silicone, and fluorinated surfactants. Among these, a surfactant selected from silicone and fluorinated surfactants is preferred, and a silicone surfactant is more preferred from the viewpoint of biological or environmental safety.

Examples of the anionic surfactant include alkyl sulfocarboxylate, α-olefin sulfonate, polyoxyethylene alkyl ether acetate, polyoxyethylene alkyl ether sulfate, N-acylamino acid or salts thereof, N-acylmethyltaurine salt, alkyl sulfate polyoxyalkyl ether sulfate, alkyl sulfate polyoxyethylene alkyl ether phosphate, rosin acid soap, castor oil sulfate salt, lauryl alcohol sulfate salt, alkylphenol phosphate, alkyl phosphate, alkyl aryl sulfonate, diethyl sulfosuccinate, diethylhexyl sulfosuccinate, or dioctyl sulfosuccinate.

Examples of the nonionic surfactant include ether surfactants, such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ether, or polyoxyethylene distyrenated phenyl ether (e.g., EMULGEN A-60, A-90, or A-500 manufactured by Kao Corporation); ester surfactants, such as polyoxyethylene oleate, polyoxyethylene distearate, sorbitan laurate, sorbitan monostearate, sorbitan monooleate, sorbitan sesquioleate, polyoxyethylene monooleate, or polyoxyethylene stearate; acetylene glycol (or acetylene alcohol) surfactants, such as 2,4,7,9-tetramethyl-5-decyne-4,7-diol, 3,6-dimethyl-4-octyne-3,6-diol, or 3,5-dimethyl-1-hexyn-3-ol (e.g., SURFYNOL 104, 104PG50, 82, 420, 440, 465, or 485 manufactured by Evonik Japan; OLFINE STG); or polyglycol ether surfactants.

Examples of the silicone surfactant include polyether-modified siloxanes or polyether-modified polydimethylsiloxanes. Examples thereof include DYNOL 960 or 980 manufactured by Air Products; SILFACE SAG001, SAG002, SAG003, SAG005, SAG503A, SAG008, SAG009, or SAG010 manufactured by Nissin Chemical Industry Co., Ltd.; BYK-345, BYK-347, BYK-348, BYK-349, BYK-3455, LP-X23288, LP-X23289, or LP-X23347 manufactured by BYK-Chemie; or TEGO Twin 4000 and TEGO Wet KL 245, 250, 260, 265, 270, or 280 manufactured by Evonik Tego Chemie.

Examples of the fluorinated surfactant include perfluoroalkyl sulfonic acid compounds, perfluoroalkyl carboxylic acid compounds, perfluoroalkyl phosphate compounds, perfluoroalkyl ethylene oxide adducts, or polyoxyalkylene ether polymer compounds having a perfluoroalkyl ether group-containing side chain. Commercially available products include Capstone FS-30 or FS-31 manufactured by The Chemours Company.

### [Other components]

If necessary, the ink according to the present embodiment may contain a fungicide, a preservative, a pH adjuster, a chelating reagent, an antirust agent, a defoaming agent, a water-soluble UV absorber, an antioxidant, a resin emulsion, or any other ink modifying agent. The content of each of these ink modifying agents may be selected as desired depending on the intended use of the ink.

### (Fungicide)

Examples of the fungicide include sodium dehydroacetate, sodium benzoate, sodium pyridinethione-1-oxide, ethyl p-hydroxybenzoate, 1,2- benzisothiazolin-3-one, or salts thereof.

### (Preservative)

Examples of the preservative include organosulfur compounds, organonitrogen sulfur compounds, organohalogen compounds, haloarylsulfone compounds, iodopropagyl compounds, haloalkylthio compounds, nitrile compounds, pyridine compounds, 8-oxyquinoline compounds, benzothiazole compounds, isothiazoline compounds, dithiol compounds, pyridine oxide compounds, nitropropane compounds, organotin compounds, phenolic compounds, quaternary ammonium salts, triazine compounds, thiazine compounds, anilide compounds, adamantane compounds, dithiocarbamate compounds, brominated indanone compounds, benzyl bromoacetate compounds, or inorganic salts. Specific examples of the organohalogen compound include sodium pentachlorophenol. Specific examples of the pyridine oxide compound include sodium-2-pyridinethiol-1-oxide. Specific examples of the isothiazoline compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, or 2-methyl-4-isothiazolin-3-one calcium chloride. Specific examples of other antifungal preservatives include sodium acetic anhydride, sodium sorbate, sodium benzoate, or Proxel GXL (S), Proxel LV, or Proxel XL-2 (S) (trade names) manufactured by Arch Chemical.

### (pH adjuster)

Examples of the pH adjuster include alkanolamines, such as diethanolamine, triethanolamine, or N-methyldiethanolamine; alkali metal hydroxides, such as lithium hydroxide, sodium hydroxide, or potassium hydroxide; ammonium hydroxide (ammonia water); alkali metal carbonates, such as lithium carbonate, sodium carbonate, or potassium carbonate; alkali metal salts of organic acids, such as sodium silicate or potassium acetate; or inorganic bases, such as disodium phosphate.

### (Chelating reagent)

Examples of the chelating reagent include disodium ethylenediaminetetraacetate, sodium nitrilotriacetate, sodium hydroxyethyl ethylenediaminetriacetate, sodium diethylenetriamine pentaacetate, or sodium uracil diacetate.

### (Antirust agent)

Examples of the antirust agent include acid sulfite, sodium thiosulfate, ammonium thioglycolate, diisopropylammonium nitrite, pentaerythritol tetranitrate, or dicyclohexylammonium nitrite.

### (Defoaming agent)

Examples of the defoaming agent include silicone compounds, silica/mineral oil-based defoaming agents, olefin compounds, or acetylene compounds. Commercially available defoaming agents include SURFYNOL DF37, DF58, DF110D, DF220, or MD-20, or OLFINE SK-14 manufactured by Shin-Etsu Chemical Co., Ltd.

### (Water-soluble UV absorber)

Examples of the water-soluble UV absorber include sulfonated benzophenone compounds, benzotriazole compounds, salicylic acid compounds, cinnamic acid compounds, or triazine compounds.

### (Antioxidant)

Examples of the antioxidant include various organic anti-fading agents or various metal complex anti-fading agents. Examples of the organic anti-fading agents include hydroquinones, alkoxyphenols, dialkoxyphenols, phenols, anilines, amines, indanes, chromans, alkoxyanilines, or heterocyclic compounds.

### (Resin emulsion)

The ink according to the present embodiment may contain a resin emulsion in addition to the fixing resin. In this case, when printed, the ink according to the present embodiment will tend to form images with higher levels of fastness properties, such as water resistance, scratch resistance, and alcohol resistance. The resin emulsion is preferably at least one selected from the group consisting of a polymer emulsion and a wax emulsion.

The polymer emulsion may be, for example, an emulsion containing polyurethane, polyester, acrylic polymer, polyvinyl acetate, polyvinyl chloride, styrene-acrylic polymer, acrylic-silicone polymer, or styrene-butadiene polymer. Among these, an emulsion of a polymer selected from the group consisting of polyurethane, acrylic polymer, and styrene-butadiene polymer is preferred.

Commercially available polymer emulsions include SUPERFLEX 420, 470, or 890 (all urethane resin emulsions manufactured by DKS Co., Ltd.); HYDRAN HW-350, HW-178, HW-163, HW-171, AP-20, AP-30, WLS-201, or WLS-210 (all urethane resin emulsions manufactured by DIC Corporation); 0569, 0850Z, or 2108 (all styrene-butadiene resin emulsions manufactured by JSR Corporation); or AE980, AE981A, AE982, AE986B, or AE104 (all acrylic resin emulsions manufactured by Emulsion Technology Co., Ltd.).

The wax emulsion may be an emulsion including a dispersion of natural or synthetic wax in an aqueous medium.

Examples of the natural wax include petroleum wax, such as paraffin wax or microcrystalline wax; lignite wax, such as montan wax; plant-based wax, such as carnauba wax or candelilla wax; or animal- or plant-based wax, such as beeswax and lanolin.

Examples of the synthetic wax include polyalkylene wax (preferably poly(C2-C4 alkylene) wax), oxidized polyalkylene wax (preferably oxidized poly(C2-C4 alkylene) wax), or paraffin wax. Among these, at least one wax selected from the group consisting of polyethylene wax, polypropylene wax, oxidized polyethylene wax, oxidized polypropylene wax, and paraffin wax is preferred.

In the emulsion, the wax particles preferably have an average particle size of 50 nm to 5 µm, more preferably 100 nm to 1 µm, for the prevention of inkjet head clogging.

Commercially available wax emulsions include CERAFLOUR 925, 929, 950, or 991, AQUACER 498, 515, 526, 531, 537, 539, 552, or 1547, AQUAMAT 208, 263, or 272, or MINERPOL 221 (all manufactured by BYK-Chemie); Mitsui Hi-Wax NL100, NL200, NL500, 4202E, 1105A, 2203A, NP550, NP055, or NP505 (all manufactured by Mitsui Chemicals, Inc.); KUE-100 or KUE-11 (all manufactured by Sanyo Chemical Industrial Co., Ltd.); or HYTEC E-6500, E-9015, or E-6400 (all manufactured by TOHO Chemical Industry Co., Ltd.).

The total content of the resin emulsion solid and the fixing resin in the ink according to the present embodiment is preferably 5 to 30% by mass, more preferably 5 to 15% by mass, further preferably 7 to 13% by mass, particularly preferably 8 to 12% by mass based on the total mass of the ink. The ink with a total content of the resin emulsion solid and the fixing resin of 5% by mass or more will tend to have a good ability to be fixed on printing media. The ink with a total content of the resin emulsion solid and the fixing resin of 30% by mass or less will tend to have good storage stability and good dischargeability.

### [Method for Preparing Ink and Other Features]

The ink according to the present embodiment may be prepared using any suitable method known in the art. An example of such a method includes preparing an aqueous dispersion containing the water-insoluble colorant and the dispersing agent; adding the fixing resin emulsion, water, the organic solvent, and optionally the ink modifying agent to the aqueous dispersion; and mixing them.

The aqueous dispersion may be prepared by, for example, phase inversion emulsification, acidification, interfacial polymerization, in-situ polymerization, in-liquid curing method, coacervation (phase separation), in-liquid drying method, melt dispersion cooling method, air suspension coating method, spray drying, or any other method. Among these methods, phase inversion emulsification, acidification, or interfacial polymerization is preferred, and phase inversion emulsification is more preferred.

For the preparation of the aqueous dispersion by phase inversion emulsification, for example, the dispersing agent is dissolved in an organic solvent, such as 2-butanone, and an aqueous solution of a neutralizing agent is added to the resulting solution to form an emulsion. The water-insoluble colorant is added to the resulting emulsion and subjected to dispersion treatment. The organic solvent and some of the water are removed from the resulting liquid by distillation under reduced pressure, so that the desired aqueous dispersion can be obtained.

The dispersion treatment may be performed using a sand mill (bead mill), a roll mill, a ball mill, a paint shaker, an ultrasonic disperser, a microfluidizer, or any other means. For example, the dispersion treatment may be performed using a sand mill filled at an appropriate ratio with beads having a size of approximately 0.01 to 1 mm. The resulting aqueous dispersion may be subjected to an operation such as filtration or centrifugation to give an aqueous dispersion containing uniform-size particles. During the preparation of the aqueous dispersion, a very small amount of a defoaming agent, such as a silicone or acetylene glycol defoaming agent known in the art, may be added to prevent foaming.

The content of inorganic impurities, such as metal cation chlorides (e.g., sodium chloride) or metal cation sulfates (e.g., sodium sulfate), in the ink according to the present embodiment is preferably as low as possible. Such inorganic impurities are often found in commercially available water-insoluble colorants. As a guide, the inorganic impurity content of the water-insoluble colorant should be at most approximately 1% by mass based on the total mass of the water-insoluble colorant. The lower limit of the inorganic impurity content should be lower than the analyzer detection limit, ideally 0% by mass. The water-insoluble colorant with a reduced inorganic-impurity content may be obtained by, for example, a method using a reverse osmosis membrane, a method including: suspending a water-insoluble colorant solid in a mixed solvent of water and a C1-C4 alcohol, such as methanol, with stirring; subjecting the suspension to filtration to separate the water-insoluble colorant; and drying the water-insoluble colorant, or a method using ion-exchange resin to adsorb inorganic impurities by ion-exchange.

The ink according to the present embodiment preferably has undergone microfiltration. The microfiltration may be performed using a membrane filter, a glass paper filter, or the like. The filter for the microfiltration typically has a pore size of 0.5 to 20 µm, preferably 0.5 to 10 µm.

The ink according to the present embodiment has high levels of color reproducibility and color saturation and provides high performance for the formation of images with less uneven coating. Moreover, when printed by recording, the ink according to the present embodiment will form images with high levels of various types of scratch resistance and various fastness properties, such as water resistance, light fastness, heat resistance, and oxidating gas resistance (e.g., ozone gas resistance).

### <Ink Set and Ink and Medium Set>

An embodiment of the present invention is directed to an ink set including: the ink according to the present embodiment described above; and an additional ink different from the ink. The additional ink may be any type different from the ink according to the present embodiment. Preferably, the additional ink has a hue different from that of the ink according to the present embodiment.

Another embodiment of the present invention is directed to an ink and medium set including: the ink or ink set according to the present embodiment descried above; and a printing medium.

The printing medium is preferably a less ink-absorbent printing medium, more preferably a non-ink-absorbent printing medium. Examples of the less ink-absorbent printing medium include plain paper sheets with no ink-absorbing layer, gravure or offset printing media, art paper sheets, coated paper sheets, matte paper sheets, or cast paper sheets. Examples of the non-ink-absorbent printing medium include PET (polyethylene terephthalate) films, PP (polypropylene) films, polyvinyl chloride sheets, glass sheets, or rubber sheets.

### <Inkjet Printing Method>

An embodiment of the present invention is directed to an inkjet printing method including: ejecting, in response to a print signal, droplets of the ink according to the present embodiment or droplets of the inks from the ink set according to the present embodiment; and depositing the droplets onto a printing medium to produce a print. The inkjet printer may have any type of nozzle and component for ejecting the ink, which may be appropriately selected depending on the purpose.

The inkjet printing method according to the present embodiment is intended to include a method including ejecting a large number of droplets of a small volume of the ink with a low water-insoluble colorant content to form images with improved quality; a method including depositing droplets of multiple inks having substantially the same hue but different water-insoluble colorant contents to form images with improved quality; and a method using the water-insoluble colorant-containing ink in combination with a colorless transparent ink to increase the scratch resistance of printed images.

The inkjet printing method may be performed using a known method. Examples of such a method include a charge control method, a drop-on-demand method (also called pressure pulse method), an acoustic inkjet method, or a thermal inkjet method. The inkjet printing method may be either a multi-pass method or a single-pass method (one-pass printing method). An industrial inkjet printer may also be used, which is preferably a line-head inkjet printer for high-speed, single-pass printing. Even under such printing conditions, the ink according to the present embodiment can form images with high coating quality and high scratch resistance.

For printing on a printing medium, for example, an ink-containing vessel (ink tank) is installed at a specific position in the inkjet printer, and the printing method described above is performed to produce a print on the printing medium. Full-color printing may also be performed using ink-containing vessels installed at specific positions in the inkjet printer to produce a print on a printing medium using the printing method described above.

In a case where a printing medium with no ink-absorbing layer is used, the printing medium is preferably subjected to surface modification treatment. The surface modification treatment may be, for example, corona discharge treatment, plasma treatment, or flame treatment. It is generally known that the effect of the surface modification treatment decreases over time. Therefore, the surface modification treatment step and the inkjet recording step are preferably performed continuously, and more preferably, the surface modification treatment step is performed immediately before the inkjet recording step.

Regarding all of the features described above, a combination of preferred features will provide a more preferred feature, and a combination of more preferred features will provide a further preferred feature. The same applies to a combination of a preferred feature and a more preferred feature, a combination of a more preferred feature and a further preferred feature, and so on.

### EXAMPLES

Hereinafter, the present invention will be described in more detail with reference to examples, which are not intended to limit the present invention.

In the description of the examples, "parts" and "%" mean "parts by mass" and "% by mass", respectively, unless otherwise specified. Unless otherwise stated, all operations including various types of synthesis in the examples were performed under stirring. If necessary, the pigment solid content of the pigment dispersion was quantified by the dry weight method using MS-70 manufactured by A&D Company, Limited. The pigment solid content is the content of only the pigment solid calculated based on the total solid mass.

### <Preparation Example 1: Preparation of pigment dispersion liquid DP1>

Joncyrl 68 (manufactured by BASF, mass average molecular weight: 13,000) (9 parts) and triethanolamine (6 parts) were dissolved in ion-exchanged water (75 parts) and stirred for 1 hour. C.I. Pigment Blue 15:4 (manufactured by Dainichiseika Color & Chemicals Mfg. Co., Ltd., Chromofine blue 4851) (30 parts) was added to the resulting solution. The resulting mixture was subjected to dispersion treatment under the conditions of 1,500 rpm for 15 hours in a sand grinder. Ion-exchanged water (40 parts) was added dropwise to the resulting liquid. The dispersing beads were removed from the liquid by filtration, so that a pigment dispersion liquid DP1 with a pigment solid content of 18.7% was obtained.

### <Preparation Example 2: Preparation of Fixing Resin Emulsions PEM-1 to PEM-8>

A glass reaction vessel (3 L in volume) equipped with a stirrer, a reflux condenser, a thermometer, and a dropping funnel was charged with ion-exchanged water (162 parts), sodium lauryl sulfate (1.4 parts), and potassium persulfate (0.3 parts). The air in the reaction vessel was replaced by nitrogen. Subsequently, the temperature in the reaction vessel was controlled to 80°C with stirring, and then a raw material liquid (emulsion) at a first stage was continuously added dropwise to the reaction vessel over 2 hours. The raw material liquid at a first stage was prepared by mixing and stirring ion-exchanged water (39 parts), sodium lauryl sulfate (0.7 parts), an ammonium salt of [a sulfuric acid ester of (a product of polyaddition of oxirane with {a product of reaction between C10-C14 branched alkanol and 1-(allyloxy)-2,3-epoxypropane}, which is composed mainly of {α-[2-(allyloxy)-1-({C10-C14 alkyloxy}methyl)ethyl]-ω-hydroxypoly(oxyethylene) (n = 1 to 100)})] (0.7 parts), and monomer components at a first stage (70 parts in total) shown in Table 1 in a separate vessel in advance to emulsify them. Note that, during the addition dropwise at the first stage, the reaction was carried out at 70°C while introducing nitrogen. After the completion of the addition dropwise, the resultant was further stirred at 80°C for 90 minutes.

Then, a raw material liquid (emulsion) at a second stage was continuously added dropwise into the reaction vessel for one hour. The raw material liquid at a second stage was prepared by mixing and stirring ion-exchanged water (19 parts), sodium lauryl sulfate (0.3 parts), an ammonium salt of [a sulfuric acid ester of (a product of polyaddition of oxirane with {a product of reaction between C10-C14 branched alkanol and 1-(allyloxy)-2,3-epoxypropane}, which is composed mainly of {α-[2-(allyloxy)-1-({C10-C14 alkyloxy}methyl)ethyl]-ω-hydroxypoly(oxyethylene) (n = 1 to 100)})] (0.3 parts), and a monomer components at a second stage (30 parts in total) shown in Table 1 in a separate vessel in advance to emulsify them. Note that, during the addition dropwise at the second stage, the reaction was carried out at 80°C while introducing nitrogen. After the completion of the addition dropwise, the resultant was further stirred at 85°C for 2 hours and then cooled to 40°C. After cooling, triethanolamine (1.5 parts) was added thereto to obtain a fixing resin emulsion PEM-1. A content of the fixing resin in the fixing resin emulsion PEM-1 is 30% by mass.

Fixing resin emulsions PEM-2 to PEM-8 were prepared in the same manner as in the fixing resin emulsion PEM-1, except that the monomer components were changed as shown in Table 1. A content of the fixing resin in each of the fixing resin emulsions PEM-2 to PEM-8 is 30% by mass.

A total amount of components used in the preparation of each polymer emulsion is shown in Table 2. The abbreviations in Tables 1 and 2 below represent the components listed below. The numerical value in each component column in Tables 1 and 2 indicates the amount (parts) of the corresponding component, and the symbol "-" means the absence of the corresponding component.
MMA: Methyl methacrylate
AMA: Allyl methacrylate
MAA: Methacrylic acid
2EHA: 2-Ethylhexyl acrylate
BMA: Butyl methacrylate
BA: Butyl acrylate

**[Table 1]**

| | PEM-1 | PEM-2 | PEM-3 | PEM-4 | PEM-5 | PEM-6 | PEM-7 | PEM-8 |
|---|---|---|---|---|---|---|---|---|
| First stage | | | | | | | | |
| MMA | 25.20 | 25.55 | 25.20 | 25.55 | 24.85 | 21.00 | 23.65 | 28.65 |
| AMA | 0.70 | 0.35 | 0.70 | 0.35 | 0.70 | 0.70 | 0.70 | 0.70 |
| MAA | 7.00 | 7.00 | 7.00 | 7.00 | 7.00 | 7.00 | 7.00 | 7.00 |
| Sodium styrenesulfonate | 0.35 | 0.35 | 0.35 | 0.35 | 0.70 | 0.35 | 0.35 | 0.35 |
| 2EHA | - | - | - | - | - | 39.90 | 34.00 | 28.00 |
| BMA | - | - | - | - | - | 1.05 | 2.30 | 2.80 |
| BA | 36.05 | 36.75 | 36.75 | 36.75 | 36.75 | - | 2.00 | 2.50 |
| 2-Ethylhexyl ether thioglycolate | 0.70 | - | - | - | - | - | - | - |
| Reactive emulsifier | 0.70 | 0.70 | 0.70 | 0.70 | 0.70 | 0.70 | 0.70 | 0.70 |
| Monomer (part(s)) | 70.70 | 70.70 | 70.70 | 70.70 | 70.70 | 70.70 | 70.70 | 70.70 |

| Second stage | | | | | | | | |
|---|---|---|---|---|---|---|---|---|
| MMA | 23.40 | 23.40 | 22.95 | 23.80 | 22.80 | 26.40 | 26.35 | 26.35 |
| AMA | 0.45 | 0.45 | 0.90 | 1.55 | 0.90 | 0.45 | 0.50 | 0.50 |
| MAA | 6.00 | 6.00 | 6.00 | 4.50 | 6.00 | 3.00 | 3.00 | 3.00 |
| Sodium styrenesulfonate | 0.15 | 0.15 | 0.15 | 0.15 | 0.30 | 0.15 | 0.15 | 0.15 |
| Reactive emulsifier | 0.30 | 0.30 | 0.30 | 0.30 | 0.30 | 0.30 | 0.30 | 0.30 |
| Monomer (part(s)) | 30.30 | 30.30 | 30.30 | 30.30 | 30.30 | 30.30 | 30.30 | 30.30 |

**[Table 2]**

| | | | | | | | | |
|---|---|---|---|---|---|---|---|---|
| | PEM-1 | PEM-2 | PEM-3 | PEM-4 | PEM-5 | PEM-6 | PEM-7 | PEM-8 |
| MMA | 48.60 | 48.95 | 48.15 | 49.35 | 47.65 | 47.40 | 50.00 | 55.00 |
| AMA | 1.15 | 0.80 | 1.60 | 1.90 | 1.60 | 1.15 | 1.20 | 1.20 |
| MAA | 13.00 | 13.00 | 13.00 | 11.50 | 13.00 | 10.00 | 10.00 | 10.00 |
| Sodium styrenesulfonate | 0.50 | 0.50 | 0.50 | 0.50 | 1.00 | 0.50 | 0.50 | 0.50 |
| 2EHA | - | - | - | - | - | 39.90 | 34.00 | 28.00 |
| BMA | - | - | - | - | - | 1.05 | 2.30 | 2.80 |
| BA | 36.05 | 36.75 | 36.75 | 36.75 | 36.75 | - | 2.00 | 2.50 |
| 2-Ethylhexyl ether thioglycolate | 0.70 | - | - | - | - | - | - | - |
| Reactive emulsifier | 1.00 | 1.00 | 1.00 | 1.00 | 1.00 | 1.00 | 1.00 | 1.00 |
| Tg (°C) | 43.2 | 40.4 | 40.1 | 38.3 | 43.9 | 23.0 | 52.9 | 62.3 |

### <Examples 1 to 5 and Comparative Examples 1 to 3: Preparation of Ink>

The inks of Examples 1 to 5 and Comparative Examples 1 to 3 were prepared for evaluation tests by mixing the components for each ink shown in Table 3 and then filtering the mixture through a membrane filter with a pore size of 3 µm.

The abbreviations in Table 3 below represent the components listed below. The numerical value in each component column in Table 3 indicates the amount (parts) of the corresponding component, and the symbol "-" means the absence of the corresponding component. Note that, the numerical values in the PEM-1 to PEM-8 columns indicate an amount (parts) used as an emulsion.
DP1: Pigment dispersion
DEGHe: Diethylene glycol monohexyl ether
SF465: Surfynol 465 (manufactured by Evonik Japan, acetylene glycol surfactant)
AQ515: AQUACER 515 (manufactured by BYK-Chemie, polyethylene wax emulsion)

**[Table 3]**

| Component | Example | | | | | Comparative Example | | |
|---|---|---|---|---|---|---|---|---|
| | 1 | 2 | 3 | 4 | 5 | 1 | 2 | 3 |
| DP1 (Pigment dispersion liquid) | 21.3 | 21.3 | 21.3 | 21.3 | 21.3 | 21.3 | 21.3 | 21.3 |
| DEGHe | 0.5 | 0.5 | 0.5 | 0.5 | 0.5 | 0.5 | 0.5 | 0.5 |
| 1,8-octanediol | 0.5 | 0.5 | 0.5 | 0.5 | 0.5 | 0.5 | 0.5 | 0.5 |
| 1,5-pentanediol | 5 | 5 | 5 | 5 | 5 | 5 | 5 | 5 |
| SF465 | 0.7 | 0.7 | 0.7 | 0.7 | 0.7 | 0.7 | 0.7 | 0.7 |
| AQ515 | 4.34 | 4.34 | 4.34 | 4.34 | 4.34 | 4.34 | 4.34 | 4.34 |
| PEM-1 | 18.33 | - | - | - | - | - | - | - |
| PEM-2 | - | 18.33 | - | - | - | - | - | - |
| PEM-3 | - | - | 18.33 | - | - | - | - | - |
| PEM-4 | - | - | - | 18.33 | - | - | - | - |
| PEM-5 | - | - | - | - | 18.33 | - | - | - |
| PEM-6 | - | - | - | - | - | 18.33 | - | - |
| PEM-7 | - | - | - | - | - | - | 18.33 | - |
| PEM-8 | - | - | - | - | - | - | - | 18.33 |
| Purified water | Balance | | | | | | | |
| Total | 100 | 100 | 100 | 100 | 100 | 100 | 100 | 100 |

### <Evaluation>

### [Resistance evaluation test]

The inks of Examples 1 to 5 and Comparative Examples 1 to 3 were each applied over a PET film (E5102, manufactured by Toyobo Co., Ltd.) using Bar Coater No. 3 in Auto Film Applicator PI-1210 (manufactured by Tester Sangyo Co., Ltd.). The film was then dried in a thermostatic chamber at 70°C for 2 minutes to give a print for testing. The resulting print for testing was cut into test pieces and evaluated for scratch resistance and tape adhesion as described below. The results are shown in Table 4 below.

### (Scratch resistance)

A coating on each test piece was scratched with a fingernail or a finger cushion, and the degree of peeling of the coating was visually observed. Fingernail scratch resistance was then evaluated using a 5-point scale of A to E based on the following evaluation criteria.

### -Fingernail scratch resistance evaluation criteria-

A: The coating does not deteriorate even when the coating is scraped with the tip of the fingernail perpendicular to the coating.
B: A portion of the coating is peeled off when the coating is scraped with the tip of the fingernail perpendicular to the coating, but the coating is not peeled off when the coating is scraped with the back of the fingernail.
C: A portion of the coating is peeled off when the coating is scraped with the back of the fingernail.
D: A portion of the coating is peeled off when the coating is scraped with the back of the fingernail, but the coating is not peeled off when the coating is scraped with the finger cushion.
E: The coating is peeled off when the coating is scraped with the finger cushion.

### (Tape adhesion)

A piece of cellophane tape (manufactured by NICHIBAN Co., Ltd., No. 405, 15 mm wide) was adhered to the coated portion of each test piece, peeled off vertically, and the degree of peeling of the coating was visually observed. Tape adhesion was then evaluated using a 5-point scale of A to E based on the following evaluation criteria.

### -Tape adhesion evaluation criteria-

A: The coating is hardly peeled off.
B: About 20% of the coating is peeled off.
C: About 50% of the coating is peeled off.
D: About 80% of the coating is peeled off.
E: The coating is completely peeled off.

### [Redispersibility evaluation test]

The inks of Examples 1 to 5 and Comparative Examples 1 to 3 were each added in an amount of 20 µL dropwise onto a glass petri dish (flat petri dish 94 mm in diameter and 22 mm in height, Model No. FS-90B manufactured by AS ONE Corporation) using a micropipette. The ink was then dried in a thermostatic chamber at 60°C for 1 hour to form a dry ink product. The cleaning liquid shown in Example 2 in PCT International Publication No. WO2020/175033 was prepared, and 10 g of the cleaning liquid was poured into the petri dish. The petri dish was then shaken under conditions at an amplitude of 2 cm in the horizontal direction 10 times per 5 seconds every 5 minutes, and then it was visually evaluated whether or not the dry ink product dissolved. Redispersibility was then evaluated using a 5-point scale of A to E based on the following evaluation criteria. The results are shown in Table 4.

### -Redispersibility evaluation criteria-

A: All the dry ink product dissolves within 5 minutes.
B: All the dry ink product dissolves within 10 minutes.
C: All the dry ink product dissolves within 15 minutes.
D: All the dry ink product dissolves within 20 minutes.
E: The dry ink product does not dissolve even after 20 minutes or more.

### [Stability evaluation test]

The inks of Examples 1 to 5 and Comparative Examples 1 to 3 were stored at 60°C for 48 hours and then left to stand under room temperature for 1 hour or more. A viscosity of the ink before and after storage was measured using an E-type viscometer (manufactured by Toki Sangyo Co., Ltd) at 32°C and 100 rpm, and a rate of change in viscosity before and after storage was calculated. Stability was then evaluated using a 5-point scale of A to E based on the following evaluation criteria. The results are shown in Table 4.

### -Stability evaluation criteria-

A: The rate of change in viscosity after the storage compared to before the storage is less than 6%.
B: The rate of change in viscosity after the storage compared to before the storage is 6% or more and less than 8%.
C: The rate of change in viscosity after the storage compared to before the storage is 8% or more and less than 10%.
D: The rate of change in viscosity after the storage compared to before the storage is 10% or more and less than 12%.
E: The rate of change in viscosity after the storage compared to before the storage is 12% or more.

**[Table 4]**

| | Example | | | | | Comparative Example | | |
|---|---|---|---|---|---|---|---|---|
| | 1 | 2 | 3 | 4 | 5 | 1 | 2 | 3 |
| Fingernail scratch resistance | A | A | A | A | A | C | C | B |
| Tape resistance | A | A | A | B | A | C | A | A |
| Redispersibility | B | B | A | B | A | D | E | D |
| Stability | B | B | A | A | A | E | D | E |

As shown in Table 3, the inks of Examples 1 to 5 were superior to those of Comparative Examples 1 to 3 in the fingernail scratch resistance, the redispersibility, and the stability. In addition, the inks of Examples 1 to 5 had superior tape resistance to the ink of Comparative Example 1. The results demonstrate that the inks of Examples 1 to 5 are highly practical with excellent fingernail scratch resistance, tape resistance, redispersibility, and stability.

## Claims

1. An inkjet ink comprising: a water-insoluble colorant; a dispersing agent; a fixing resin; and water,
the fixing resin comprising a C1-C4 alkyl (meth)acrylate unit and a styrenesulfonic acid unit as constituent monomer units, and comprising at least a butyl acrylate unit as the C1-C4 alkyl (meth)acrylate unit, and
the fixing resin comprising more than 31.5% by mass and less than 46.5% by mass of the butyl acrylate unit and 0.1% by mass or more and less than 3.0% by mass of the styrenesulfonic acid unit.

2. The inkjet ink according to claim 1, wherein the fixing resin comprises, as the constituent monomer unit, at least one selected from the group consisting of a methyl methacrylate unit, an allyl methacrylate unit, and a methacrylic acid unit.

3. The inkjet ink according to claim 1, wherein the fixing resin is a resin obtained by polymerization in a presence of a reactive emulsifier.

4. An ink set comprising: the inkjet ink according to any one of claims 1 to 3; and an additional inkjet ink different from the inkjet ink.

5. An ink and medium set comprising: the inkjet ink according to any one of claims 1 to 3 or the ink set according to claim 4; and a printing medium.

6. A printed medium comprising: a medium; and an inkjet ink deposited on the medium, the inkjet ink being the inkjet ink according to any one of claims 1 to 3.
